(19) **Europäisches Patentamt / European Patent Office / Office européen des brevets**

(11) **EP 3 782 963 A1**

(12) **EUROPEAN PATENT APPLICATION**
published in accordance with Art. 153(4) EPC

(43) Date of publication:
**24.02.2021 Bulletin 2021/08**

(51) Int Cl.:
*C03C 8/14* (2006.01)  *C03C 8/02* (2006.01)
*C23D 5/00* (2006.01)

(21) Application number: **18915342.2**

(22) Date of filing: **25.10.2018**

(86) International application number:
**PCT/JP2018/039691**

(87) International publication number:
**WO 2019/202759 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2018  JP 2018080733**

(71) Applicant: **Saga Prefecture**
**Saga-shi, Saga 840-0041 (JP)**

(72) Inventor: **SHIRAISHI, Atsunori**
**Nishimatsuuragun, Saga  844-0022 (JP)**

(74) Representative: **Wilson Gunn**
**Blackfriars House**
**The Parsonage**
**5th Floor**
**Manchester M3 2JA (GB)**

(54) **GLASS MATERIAL FOR ENAMEL, ENAMEL PRODUCT, AND METHOD FOR PRODUCING ENAMEL PRODUCT**

(57)     A glass material for enamel is provided that can be used to produce an enamel product in which a luster pigment does not dissolve in glass and can thus maintain its luster properties to provide a metallic texture and high surface gloss.

The glass material for enamel in accordance with the present invention is characterized by containing a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, and a luster pigment for providing a metallic look.

FIG.3

**Description**

Technical Field

The present invention relates to glass materials for enamels that can form a vitreous layer having metallic luster properties and gloss, as well as enamel products using such glass materials for enamels, and production methods thereof.

Background Art

In recent years, metallic painting is increasingly employed in paints for automobiles, smart phones, home electronics and other products. Such metallic painting used in each of these products uses a paint composed of a base resin component and a luster pigment added to the resin component for adding a metallic look to the paint. Such luster pigments include flake-shaped fine particles (plate-shaped particles) coated with titanium oxide or ferric oxide as a high refractive index treatment. These particles are randomly embedded in the coating film and reflect incident light in various directions, thus providing the metallic look.

Attempts have been made to also apply such metallic looks to enamel products. For example, Patent Document 1 discloses a metallic enamel product having at least a bottom glaze layer and a top glaze layer deposited on a metal foundation, which is characterized in that the top glaze layer contains a mica powder having its surface coated with a metal oxide, from 1 to 4 % (1 % exclusive) of fluorine, and 0.3 to 1.5 % of $MoO_3$ or $V_2O_5$.

Patent Document 1: JP-A-2001-342581
Patent Document 2: JP-A-Hei-4-325438

Summary of Invention

Technical Problem

In manufacturing enamel products having a metallic appearance, a glass material containing an added luster pigment that provides a metallic look is applied to a substrate, which is then fired. However, such luster pigments tend to melt in high temperature glass and lose their metallic look upon firing.

Thus, when typical frit (glass) used in enamels is used to produce a metallic enamel product, the luster pigments will melt in the frit and the resulting top glaze layer may not have the desired metallic look.

On the other hand, enamel products using mica powder are traditionally known as enamel products using luster pigments (See, for example, Patent Document 2 (JP-A-Hei-4-325438)). Such a enamel product uses a relatively large amount of luster pigments (as much as 10 to 15 wt%) relative to the frit to correspondingly decrease the proportion of glass so that the luster pigments are less likely to dissolve in the glass.

While such an enamel product using mica powder possesses a certain degree of metallic luster as it uses the same luster pigments as those used in the metallic paints, the enamel product tends to have a matte-like texture with little surface gloss due to the insufficient amount of glass available to cover the surface of the product to provide gloss, and due to numerous mica crystals present on the surface of the enamel product.

Another drawback with the enamel products using mica powder is that because of the insufficient amount of the glass component to cover the surface, dirt and grime are more likely to accumulate on their surfaces that are difficult to remove. In particular, when the enamel products are used as eating utensils, oil stains from food are more likely to stand out, making the appearance of the eating utensils unattractive.

Solution to Problem

The present invention addresses the above-identified problems and thus, a glass material for enamel in accordance with the present invention may include a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide, and potassium oxide; and a luster pigment for providing a metallic look.

The glass material for enamel in accordance with the present invention may contain, for example, 0.1 wt% to 9 wt% of the luster pigment, with the remainder being the frit.

The glass material for enamel in accordance with the present invention may contain, for example, 0.1 wt% to 9 wt% of the luster pigment and a non-luster pigment, with the remainder being the frit.

The glass material for enamel in accordance with the present invention may contain, for example, 0.1 wt% to 9 wt% of the luster pigment and a chromogenic metal compound, with the remainder being the frit.

In the glass material for enamel in accordance with the present invention, the luster pigment may contain, for example, plate-shaped particles, and/or plate-shaped particles coated with one or more oxides selected from the group consisting of titanium oxide, ferric oxide, silicon oxide, tin oxide, and zirconium oxide.

In the glass material for enamel in accordance with the present invention, the plate-shaped particles may be, for example, one or more selected from the group consisting of mica, silicon oxide, aluminum oxide, and borosilicate glass.

An enamel product in accordance with the present invention may include, for example, a glass layer containing 0.1 wt% to 9 wt% of a luster pigment for providing a metallic look.

In the enamel product in accordance with the present invention, the glass layer may contain, for example, 40 wt% to 60 wt% of silicon dioxide, 15 wt% to 35 wt% of boron oxide, and 18 wt% or less of one or more alkali metal oxides selected from the group consisting of lithium oxide, sodium oxide, and potassium oxide.

In the enamel product in accordance with the present invention, the glass layer may contain, for example, a non-luster pigment.

In the enamel product in accordance with the present invention, the glass layer may contain, for example, a chromogenic metal compound.

In the enamel product in accordance with the present invention, the luster pigment may contain, for example, plate-shaped particles, and/or plate-shaped particles coated with one or more oxides selected from the group consisting of titanium oxide, ferric oxide, silicon oxide, tin oxide, and zirconium oxide.

In the enamel product in accordance with the present invention, the plate-shaped particles may be, for example, one or more selected from the group consisting of mica, silicon oxide, aluminum oxide, and borosilicate glass.

In the enamel product in accordance with the present invention, the glass layer has a specular surface gloss value (Gs 60°) of 60 or higher, and the value of luminous reflectance Y at a light receiving angle of 30° is increased from the value of luminous reflectance Y at a light receiving angle of 0° in a variable angle luminous intensity distribution measured at an incident light angle of -45°.

A method for producing an enamel product in accordance with the present invention may include the steps of preparing a glass material for enamel containing a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, and a luster pigment for providing a metallic look; preparing a paste containing the glass material for enamel; applying the paste to a substrate; and baking the substrate.

A method for producing an enamel product in accordance with the present invention may include the steps of preparing a glass material for enamel containing a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, a luster pigment for providing a metallic look, and a non-luster pigment; preparing a paste containing the glass material for enamel; applying the paste to a substrate; and baking the substrate.

A method for producing an enamel product in accordance with the present invention may include the steps of preparing a glass material for enamel containing a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, a luster pigment for providing a metallic look, and a chromogenic metal compound; preparing a paste containing the glass material for enamel; applying the paste to a substrate; and baking the substrate.

Advantageous Effects of Invention

According to the glass material for enamel in accordance with the present invention as described above, the luster pigments do not dissolve in high temperature glass and can thus maintain their luster property at top glaze firing temperatures used for enamel products (approximately 800°C). As a result, enamel products can be provided that have a metallic texture and have a luster glass layer with surface gloss applied thereto.

Further, the glass material for enamel in accordance with the present invention enables provision of enamel products having metallic luster that maintain a high surface gloss, are less likely to accumulate dirt and grime on the surface thereof, and that can be used as eating utensils.

Moreover, the enamel products in accordance with the present invention are enamel products that possess a "metallic" texture and have a luster glass layer with surface gloss applied thereto.

In addition, the production methods for the enamel products in accordance with the present invention enable production of enamel products that possess a "metallic" texture and have a luster glass layer with surface gloss applied thereto.

Brief Description of the Drawings

FIG. 1 is a diagram illustrating the principle of how a luster pigment provides a metallic look.
FIG. 2 illustrates the outline of a system for measuring the variable angle luminous intensity distribution.
FIG. 3 is a diagram showing the results of measurement of the variable angle luminous intensity distribution.
FIG. 4 is a partial enlarged view of FIG. 3.
FIG. 5 is a diagram showing the results of measurement of the variable angle luminous intensity distribution in Examples 1 through 6 of the present invention (1).
FIG. 6 is a diagram showing the results of measurement of the variable angle luminous intensity distribution in Examples 11 through 12 (2).
FIG. 7 is a diagram showing the results of measurement of the variable angle luminous intensity distribution in Comparative Examples 1 and 2.

Detailed Description of the Invention

The present invention will now be specifically described.

A glass material for enamel in accordance with the present invention is intended to be used to form the outermost glass layer of an enamel product. The outermost glass layer of the enamel product may also be referred to herein as "top glaze layer." An objective of the present invention is to form the glass layer as a luster glass layer with a "metallic" texture and surface gloss by using the glass material for enamel.

The enamel product is generally manufactured by applying a bottom glaze onto a metal material and firing it to form a bottom glaze layer, and then applying a top glaze thereon and firing it to form a top glaze layer. The glass material for enamel in accordance with the present invention is used in the top glaze for forming the top glaze layer. The top glaze layer formed by firing the top glaze may be referred to herein as "glass layer." A subject to which to apply the top glaze using the glass material for enamel in accordance with the present invention is referred to herein as "substrate." Specifically, in Examples, a "substrate" refers to a metal material having the bottom glaze layer formed thereon.

It should be appreciated that the present invention does not exclude the possibility of forming intermediate glaze layer(s) between the bottom glaze layer and the top glaze layer. In cases where intermediate glaze layers are present between the bottom glaze layer and the top glaze layer, the "substrate" as used herein refers to a metal material having the intermediate glaze layer (s) and the bottom glaze layer formed thereon. Only a single intermediate glaze layer or more than one intermediate layer may be provided.

As the metal material, iron, aluminum, steel sheets for use in enamels, cast iron, steel sheets, Al-plated steel sheets, Al-Zn-plated steel sheets, stainless steel, copper, bronze, silver, gold and other metal materials can be envisaged.

As used herein, "top glaze for enamels" refers to a paste formed by adding water or other solvents to the glass material for enamels to apply to the substrate. The top glaze for enamels is fired to form the top glaze layer (glass layer) on the substrate.

While the glass material for enamel in accordance with the present invention will be described with reference to the following Examples in which the glass material for enamel in accordance with the present invention is used to make an enamel product, the glass material for enamel in accordance with the present invention may also be used in the decoration of cloisonne ware.

The present inventor has discovered that luster pigments for providing a metallic look tend to melt in high temperature glass and, at a top glaze firing temperature (about 800°C) used for enamel products, lose their luster properties that provide the metallic texture. Accordingly, the present inventor considered decreasing the fluxing power (the ability to dissolve a pigment) of glass in designing a glass material for enamel in accordance with the present invention and prepared a frit with a decreased flux power.

The present inventor also considered decreasing the flux power (the ability to dissolve a pigment) of the frit for use in the glass material for enamel in accordance with the present invention by decreasing the proportion of alkali metals or alkaline earth metals in the composition of the frit as compared to the composition of a typical frit (glass) such as commercially available frits used in enamels. Given that the amounts of alkali metals or alkaline earth metals were decreased, the present inventor further considered their specific breakdown proportions.

For commercially available frits, a general technical approach for improving the flux power has been developed. According to this approach, lighter elements, such as Li and Na, of alkaline metals are increased whereas K, a heavier element, is decreased. Conversely, lighter elements, such as Ca, of alkaline earth metals is decreased whereas heavier elements, such as Ba, is increased. In preparing frits for use in the present invention, the present inventor examined the opposite approach to the above-described technical approach.

In the glass material for enamel in accordance with the present invention, for alkali metals, lighter elements such as Li and Na are decreased whereas heavier elements such as K is increased. Although alkali metal oxides are added with the aim of lowering the melting point, alkali metal oxides such as $Li_2O$ (lithium oxide) and $Na_2O$ (sodium oxide) also act to facilitate efficient dissolution of the luster pigments, which must be considered in designing the composition of the frit. More specifically, one or more alkali metal oxides selected from $Li_2O$ and $Na_2O$ are advantageously added to the frit in an amount of 4 wt% or less. The amount of the alkali metal oxide is preferably 3.5 wt% or less, more preferably 3.1 wt% or less with 0 wt% inclusive.

On the other hand, since alkali metal oxides also contribute to lowering the melting point and also to increasing chemical stability and durability, $K_2O$ (potassium oxide) is typically added to the frit in an amount of 3 wt% or higher. Thus, the amount of $K_2O$ is preferably 5 wt% or more, more preferably 6.7 wt% or more.

Alkaline earth metal oxides are added to the frit to cause vitrification. For alkaline earth metals used in the glass material for enamel according to the present invention, basically, lighter elements such as Ca are increased and heavier elements such as Ba are decreased in the preparation of frit. While the frit prepared in such a manner will have a more suitable composition for use in the glass material for enamel, the optimal amount of CaO will vary depending on the proportions of alkali metal oxides, alkaline earth metal oxide, and zinc oxide.

Thus, the amount of CaO (calcium oxide) in the frit is preferably 0.5 wt% or more, more preferably 1 wt% or more. The amount of CaO may be 0 wt% or more, however. In the present embodiment, CaO intentionally excluded from the composition of the frit is also counted.

BaO (barium oxide) may be added to the frit in an amount of 9 wt% or less. The amount of BaO is preferably 7 wt% or less, more preferably 5 wt% or less with 0 wt% inclusive.

While lighter elements, such as Ca, of alkaline earth metals are increased and heavier elements, such as Ba, are decreased in the glass material for enamel in accordance with the present invention, the amounts of both CaO and BaO may be 0 wt% if the amount of at least one alkali metal oxide selected from the group consisting of $Li_2O$ and $Na_2O$ is close to 4 wt%, the upper limit.

When BaO in the frit composition is 0 wt%, SrO (strontium oxide) may be added instead.

Silicon dioxide ($SiO_2$), the major component of the glass material for enamel in accordance with the present invention, may be added in an amount of 40 wt% to 60 wt%. The amount of $SiO_2$ is preferably 42 wt% to 57 wt%, more preferably 43.7 wt% to 54.1 wt%. If the amount is less than 40 wt%, then the proportions of the alkali metals and the alkaline earth metals in the frit composition increase correspondingly, as does the fluxing power, thereby increasing the likelihood of dissolving the luster pigments. If the amount exceeds 60 wt%, then the melting point of the frit increases and the dissolution of top glaze layer at the firing temperature of 800°C becomes insufficient, thus leading to the loss of gloss in the top glaze layer.

$B_2O_3$ (boron oxide) is added to the frit to lower the melting temperature of the frit. $B_2O_3$ may be added in an amount of 15 wt% to 35 wt% of the frit composition. The amount of $B_2O_3$ is preferably 18 wt% to 33 wt%, more preferably 21.7 wt% to 29 wt%. If the amount is less than 15 wt%, then the melting point of the frit increases and the dissolution of top glaze layer at the firing temperature of 800°C becomes insufficient, thus leading to the loss of gloss in the top glaze layer. If the amount exceeds 35 wt%, then the fluxing power increases, increasing the likelihood of dissolving the luster pigments.

$Al_2O_3$ (aluminum oxide) is used to modify the $SiO_2$ framework as the frit is formed. When added in a suitable amount, aluminum oxide improves the acid resistance of glass. While frit can still be formed even if the amount of $Al_2O_3$ is 0 wt%, $Al_2O_3$ may be added in an amount of 8 wt% or less of the frit composition. The amount of $Al_2O_3$ is preferably 8 wt% or less, more preferably 0.2 wt% to 6.3 wt%. If the amount exceeds 10 wt%, then the melting point increases and the frit may undergo devitrification.

ZnO (Zinc Oxide) is added in the form of oxide to lower the melting point and impart chemical stability. ZnO may be added in an amount of 10 wt% or less of the frit composition. The amount of ZnO is preferably 2 wt% to 6 wt%, more preferably 3.0 wt% to 4.2 wt%. If the amount exceeds 10 wt%, then the chemical resistance may be deteriorated.

$ZrO_2$ (zirconium dioxide) is added to the frit with the aim of imparting acid resistance and chemical stability. $ZrO_2$ may be added in an amount of 10 wt% or less of the frit composition. The amount of $ZrO_2$ is preferably 2 wt% to 8 wt%, more preferably 4.7 wt% to 5.1 wt%. If the amount exceeds 10 wt%, the melting temperature is increased and the frit may undergo devitrification.

The frit composition as described above in the glass material for enamel in accordance with the present invention serves to decrease the flux power (ability to dissolve pigments) of glass and avoid significant changes from the melting point and thermal expansion coefficient from conventional frits for enamels.

The base composition for the frit composition as described above is mainly composed of $SiO_2$, $B_2O_3$, and alkali metal oxides while the other components may be suitably adjusted as desired. Accordingly, the composition of frit is defined in the scope of claims of the present invention by silicon dioxide, boron oxide, and alkali metal oxides (such as lithium oxide, sodium oxide, and potassium oxide).

In the frit composition for use in the present invention, at least one alkali metal oxide selected from the group consisting of lithium oxide, sodium oxide, and potassium oxide may be added in an amount of 18 wt% or less. Thus, the amount of alkali metal oxides is preferably 15 wt% or less, more preferably 13.7 wt% or less.

It should be noted that while the components of the frit (CaO, BaO, SrO, $Al_2O_3$, and $ZrO_2$) have been described specifically, they are only illustrative. Though any numerical ranges are not particularly defined for alkaline earth metals in the scope of claims of the present specification, they are also important as frameworks for glass.

In the glass material for enamel in accordance with the present invention, a luster pigment for providing a metallic look is added to the frit having a composition as described above in an amount of 0.1 wt% to 9 wt%. The amount of the luster pigment is preferably 0.2 wt% to 8 wt%, more preferably 0.5 wt% to 8 wt%. The luster pigment does not provide the luster properties when added in amounts less than 0.1 wt%. Conversely, if the amount of the luster pigment is increased to more than 9 wt%, then the amount of glass available to cover the surface of top glaze layer and provide gloss is decreased and the abundant luster pigment present in the surface of top glaze layer leads to decreased surface gloss and a matte-like texture.

The luster pigment for use in the glass material for enamel in accordance with the present invention preferably contains plate-shaped particles (flake-shaped fine particles) by themselves or plate-shaped particles (flake-shaped fine particles) coated with one or more oxides selected from titanium oxide, ferric oxide, silicon oxide, tin oxide, and zirconium oxide. In such a case, the luster pigment may contain both plate-shaped particles (flake-shaped fine particles) by themselves without coating and plate-shaped particles (flake-shaped fine particles) coated with the oxide, or either one of plate-shaped particles (flake-shaped fine particles) by themselves without coating or plate-shaped particles (flake-shaped fine particles) coated with the oxide. The plate-shaped particles are preferably one or more of mica, silicon oxide, aluminum oxide and borosilicate glass.

A glass material for enamel was prepared by adding 0.5 to 8 wt% of the luster pigment to the frit having a composition as described above. The glass material for enamel was then added with water or other solvents to form a paste, which was then applied to the substrate surface and dried. Subsequently, the coated enamel was fired at 750 to 830°C to form a top glaze layer (the thickness of the top glaze layer (glass layer) after firing was about 0.05 to 0.2 mm). The resulting top glaze layer is characteristic in that the luster pigments do not dissolve in glass and can thus maintain their luster properties to provide a "metallic" texture and high surface gloss.

If the thickness of the top glaze layer (glass layer) after firing is less than 0.05 mm, then sufficient metallic luster properties may not be achieved. In contrast, if the thickness exceeds 0.2 mm, the metallic glitter properties of the top glaze layer (glass layer) may not be improved and the formed metallic top glaze layer (glass layer) becomes susceptible to peeling and cracking. The average particle size of the frit having a composition as described above is preferably from 5 to 20 microns in view of the workability upon application with brushes. The particles size distribution (size distribution) of the frit was determined by using LMS-2000e, a laser diffraction/scattering size distribution measurement instrument manufactured by Seishin Enterprise. In the measurement of the particles size distribution (size distribution) of the frit, the refractive index of the particle was set to 1.52 and the absorbance of the particles was set to 0. In the present specification, the d50 value based on the measurement as described above is used as a measure of the particle size distribution (size distribution) of the frit.

Enamel products in accordance with the present invention having a top glaze layer comprising a glass material for enamel in accordance with the present invention have a texture resembling metallic paintings that possesses surface gloss as well as luster, a characteristic not achieved by conventional top glaze layer. The surface gloss of the enamel product in accordance with the present invention as evaluated by specular gloss (Gs 60°) of its surface is 60 or higher.

The luster property of enamel products was evaluated by comparing the value of luminous reflectance Y at a light receiving angle of 0° with the value of luminous reflectance Y at a light receiving angle of 30° in the variable angle luminous intensity distribution measured at an incident light angle of -45°. Specifically, the enamel products in accordance with the present invention have an increased value of luminous reflectance Y at a light receiving angle of 30° than the value of luminous reflectance Y at a light receiving angle of 0° in the variable angle luminous intensity distribution measured at an incident light angle of -45°.

The firing temperature during the production of the enamel products in accordance with the present invention is the same as that used for conventional top glaze layer, namely, from about 750°C to about 830°C.

Also, the luster of the enamel products in accordance with the present invention may be varied by varying the size of the luster pigments. Furthermore, enamel products having a wide range of metallic colored top glaze layers may be manufactured by adding, in addition to the luster pigments, other pigments (pigments other than the luster pigments), and chromogenic metal compounds.

The chromogenic metal compound (mostly metal oxide) as used herein is a metal compound that colors the glass layer by the color of the metal oxide itself, or by being ionized upon firing. Such chromogenic metal compounds include ferric oxide, chromium oxide, cobalt oxide, copper oxide, manganese dioxide, and copper carbonate.

The enamel products having a top glaze layer applied thereto using the glass material for enamel in accordance with the present invention do not haze or cause any other change in appearance, nor does their surface gloss change when they are immersed (24 hours) in a 4% aqueous acetic acid solution in an acid resistance test.

In addition, by adding 3 wt% or less of rare earth metal oxides such as lanthanum oxide to the glass material for enamel in accordance with the present invention, the acid resistance may be further improved.

The glass material for enamel in accordance with the present invention may be formed in the form of transfer paper.

Furthermore, according to the glass material for enamel in accordance with the present invention, enamel products having a gold top glaze layer with surface gloss may be manufactured at low cost by using gold luster pigments containing plate-shaped particles (flake-shaped fine particles) surface-coated with ferric oxide. The enamel products in accordance with the present invention have strongly fixed plate-shaped particles (flake-shaped fine particles) due to the abundance of glass, and thus improves the resistance to washing.

According to the glass material for enamel in accordance with the present invention as described above, luster pigments do not dissolve in high temperature glass and can thus maintain their luster property at top glaze firing temperatures used for enamel products (approximately 800°C). As a result, enamel products can be provided that have a metallic texture and have a luster glass layer with surface gloss applied thereto.

Further, the glass material for enamel in accordance with the present invention enables provision of enamel products having metallic luster that maintain a high surface gloss, are less likely to accumulate dirt and grime on the surface thereof, and that can be used as eating utensils.

Moreover, the enamel products in accordance with the present invention are enamel products that possess a "metallic" texture and have a luster glass layer with surface gloss applied thereto.

In addition, the production methods for the enamel products in accordance with the present invention enable production of enamel products that possess a "metallic" texture and have a luster glass layer with surface gloss applied thereto.

Examples

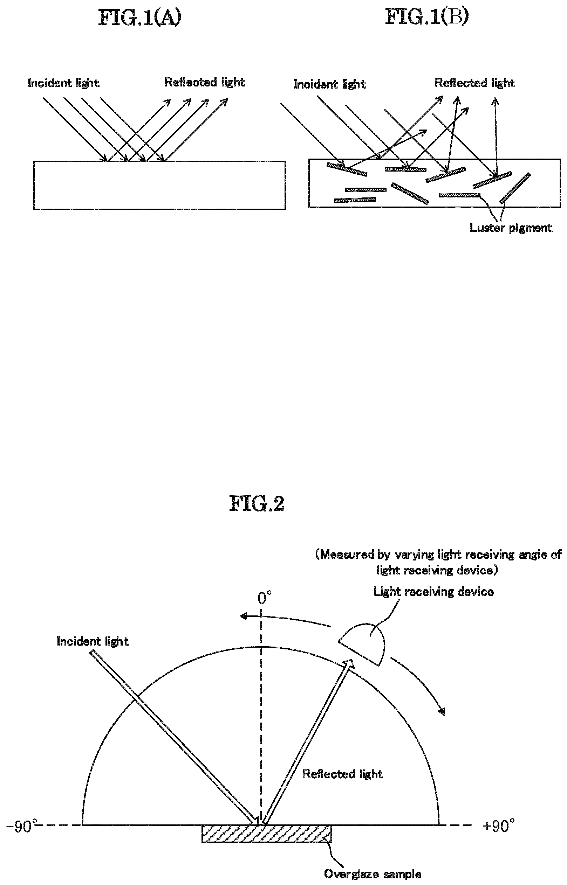

First, luster properties will be described. FIG. 1 illustrates the manner in which a luster pigment provides metallic look, wherein FIG. 1A schematically depicts a top glaze layer with no metallic luster, and FIG. 1B schematically depicts a top glaze layer containing the luster pigment. In the case of the top glaze layer of FIG. 1A, the incident light is mostly reflected by specular reflection. In contrast, in the case of the top glaze layer of FIG. 1B, the highly reflective plate-shaped particles (luster pigment) oriented in various directions reflect the incident light in various angles and scatter the specular component. As a result, a "metallic" look can be provided.

In the present Examples, the variable angle luminous intensity distribution was measured to evaluate the metallic look as described above. At present, no JIS standards or other industrial standards such as in the painting industry exist for evaluation of the metallic look.

The principles of measuring the variable angle luminous intensity distribution utilize the fact that the top glaze layer having metallic glitter properties have varying intensity of reflected light and thus, different glitter looks depending on the angles at which light is incident and the angles at which light is received (viewing angle). FIG. 2 illustrates the outline of a system for measuring the variable angle luminous intensity distribution. As shown in FIG. 2, the angle of incident light is fixed while the position of the light receiving device is changed to vary the light receiving angle. The luminous reflectance Y; XYZ color space (CIE 1931 color space) is then measured to observe changes. In the present examples, a variable angle spectrophotometer GC 5000 manufactured by Nippon Denshoku Industries was used. Specifically, light was irradiated onto the surface of the top glaze layer at an incident angle of -45° and the luminous reflectance (Y) was measured by varying the light receiving angle from -20° to 80° at 5-degree increments.

In the present examples, the presence or absence of the metallic luster property is determined by comparing the value of the luminous reflectance Y at a light receiving angle of 0° with the value of the luminous reflectance Y at a light receiving angle of 30° in the variable angle luminous intensity distribution measured at an incident light angle of -45°, and determining whether or not the value of the luminous reflectance Y at a light receiving angle of 30° (also referred to as "reflectance at 30° light receiving angle") is increased from the value of the luminous reflectance Y at a light receiving angle of 0° (also referred to as "reflectance at 0° light receiving angle").

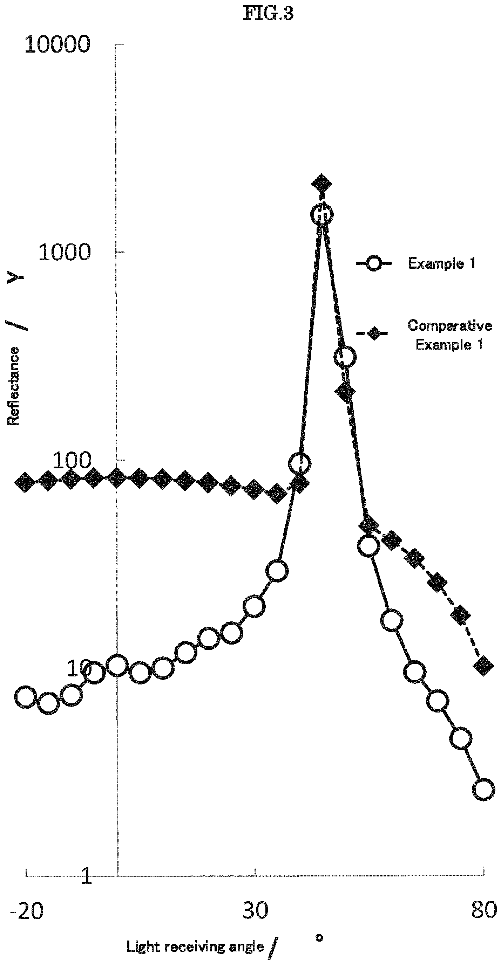

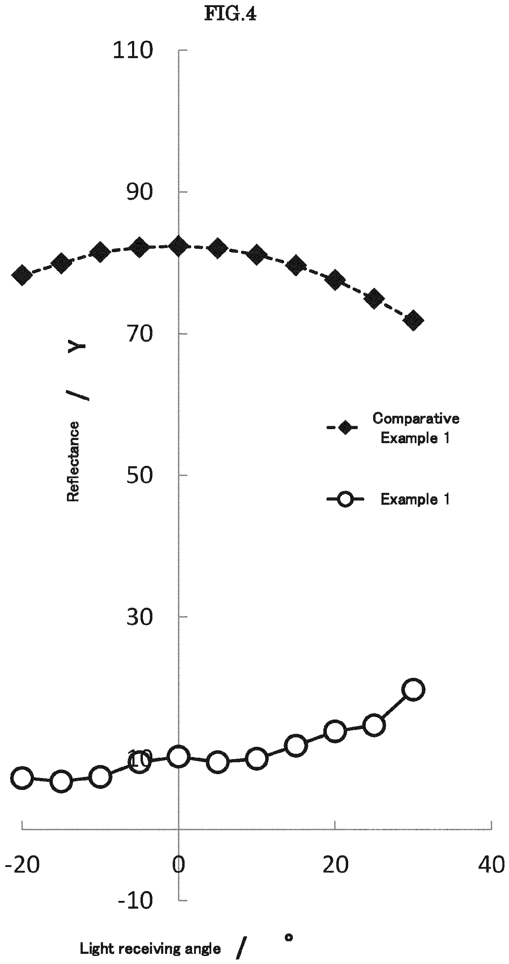

FIG. 3 shows the results of the measurement of variable angle luminous intensity distribution for the manufactured metallic top glaze layer (Example 1) and a typical lusterless top glaze layer (Comparative Example 1). FIG. 4 is an enlarged view of a part of FIG. 3 ranging from -20 to 30°.

As can be seen, the luster pigment-free top glaze layer (Comparative Example 1) has a maximum reflectance at around 0° within the range from -20° to 30° (before the peak at 40 to 50° by specular reflection) and slightly decreasing reflectance toward 30°, whereas the top glaze layer containing the luster pigment (Example 1) has reflectance that increases toward 30° with increasing light receiving angle (FIG. 4). This is because highly reflective plate-shaped luster pigments present in the top glaze layer (glass layer) are oriented at various angles in the top glaze layer (glass layer) and scatter the specular component.

This indicates that, for the incident light angle of -45° in the measurement of variable angle luminous intensity distribution, the top glaze layer having a metallic luster property has a higher reflectance at the light receiving angle of 30° than the reflectance at the light receiving angle of 0°. In other words, for the incident light angle of -45° in the measurement of variable angle luminous intensity distribution, a top glaze layer having a reflectance higher at a light receiving angle of 30° than at a light receiving angle of 0° can be said to have a metallic luster property.

While the magnitude of reflectance itself may be related to the intensity of luster, it is not related to the presence or absence of luster. Rather, the percent decrease or increase between the reflectance at a light receiving angle of 0° and the reflectance at a light receiving angle of 30° directly affects the metallic luster.

For this reason, the change in reflectance between light receiving angles of 0° and 30° ($Y_{(0-30)}$) was determined for a top glaze layer containing a luster pigment with metallic luster (Examples of the present invention) and for a top glaze layer without metallic luster (Comparative Examples) for comparison, according to the following equation:

$$Y_{(0-30)} = \{(Y_{(30)} - Y_{(0)}))/Y_{(0)}\} \times 100$$

wherein $Y_{(0)}$ = reflectance at light receiving angle of 0°, and $Y_{(30)}$ = reflectance at light receiving angle of 30°.

The light receiving angles at which to measure the reflectance were selected to be 0° and 30° because, in the quality evaluation of metallic paintings performed in the painting industries (for evaluating the intensity of metallic look, rather than the presence or absence of metallic look), the luster (glitter) evaluation (quality evaluation) of metallic painting is often performed by measuring the variable angle luminous intensity distribution at - 65°, - 30°, 0°, 20°, and 30° for the - 45° incident light angle to determine the luminous reflectance (Y) or the L* value of L*a*b* color space (brightness). The light receiving angles 0° and 30° used as a condition for this measurement procedure were therefore chosen.

The JIS-Z8741 standard is used in the present embodiment to measure the specular gloss (Gs 60°) on the surface of each top glaze layer.

In the following, Examples 1 through 12 were prepared as top glaze layers containing luster pigments (Examples of the present invention) and each measurement was performed on them. Of these Examples, Example 11 is a top glaze layer containing both a luster pigment and a non-luster pigment.

Top glaze layers without metallic luster looks (Comparative Examples) were also prepared and each measurement was performed on them. Overview of Comparative Examples is as follows:

Comparative Example 1 is a top glaze layer based only on a commercially available frit used in the present invention.
Comparative Example 2 is a top glaze layer formed by adding a luster pigment to a commercially available frit.

(Example 1)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.

Frit (1) in Table 1 was prepared and 2 wt% of Luster Pigment a in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 84.7. Using a variable angle spectrophotometer GC 5000 manufactured by Nippon Denshoku Industries, light was irradiated onto the surface of the sample at an incident angle of - 45° and the luminous reflectance (Y) of the sample was measured by varying the light receiving angle from - 20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 91.9%.

Here,

(Percent change in reflectance between light receiving angles of 0° and 30°) $Y_{(0-30)} = \{(Y_{(30)} - Y_{(0)}))/Y_{(0)}\} \times 100$

wherein $Y_{(0)}$ = reflectance at light receiving angle of 0°, and $Y_{(30)}$ = reflectance at light receiving angle of 30°.

(Example 2)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.
Frit (2) in Table 1 was prepared and 2 wt% of Luster Pigment a in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 780°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting.
The specular gloss (Gs 60°) of the surface was measured by using a VG2000 gloss meter manufactured by Nippon Denshoku Industries and was determined to be 80.7. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 90.0%.

(Example 3)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.
Frit (3) in Table 1 was prepared and 1 wt% of Luster Pigment a in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 780°C for 10 min to form a top glaze layer (the top glaze layer was about 0.18 mm thick) . The resulting enamel top glaze layer had a texture that possessed surface gloss as well as luster, not like any of conventional enamel top glaze layers. The texture resembled that of metallic painting.
The specular gloss (Gs 60°) of the surface was measured by using a VG2000 gloss meter manufactured by Nippon Denshoku Industries and was determined to be 67.5. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 224.0%.

(Example 4)

TMG-094 manufactured by Tokan Material Technology was applied onto a 5 × 5 cm, 1.2 mm-thick SPCC steel sheet. After drying, the steel sheet was fired by maintaining in an electric furnace at 780°C for 15 min to form a deep gray (almost black in color) bottom glaze layer.
Frit (4) in Table 1 was prepared and 1 wt% of Luster Pigment b in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 780°C for 10 min to form a top glaze layer (the top glaze layer was about 0.18 mm thick) . The resulting enamel top glaze layer had a texture that possessed surface gloss as well as luster, not like any of conventional enamel top glaze layers. The texture resembled that of metallic painting.
The specular gloss (Gs 60°) of the surface was measured by using a VG2000 gloss meter manufactured by Nippon Denshoku Industries and was determined to be 93.1. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 66.5%.

(Example 5)

TMG-094 manufactured by Tokan Material Technology was applied onto a 5 × 5 cm, 1.2 mm-thick SPCC steel sheet. After drying, the steel sheet was fired by maintaining in an electric furnace at 780°C for 15 min to form a deep gray (almost black in color) bottom glaze layer.

Frit (5) in Table 1 was prepared and 0.5 wt% of Luster Pigment b in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 780°C for 10 min to form a top glaze layer (the top glaze layer was about 0.12 mm thick) . The resulting enamel top glaze layer had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 85.4. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 250.1%.

(Example 6)

TMG-031 manufactured by Tokan Material Technology was applied onto a 5 × 5 cm, 1.2 mm-thick SPCC steel sheet. After drying, the steel sheet was fired by maintaining in an electric furnace at 880°C for 15 min to form a navy blue (almost black in color) bottom glaze layer.

Frit (6) in Table 1 was prepared and 1 wt% of Luster Pigment b in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 89.6. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 84.6%.

(Example 7)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.

Frit (7) in Table 1 was prepared and 8 wt% of Luster Pigment b in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 80.1. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 159.6%.

(Example 8)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.

Frit (8) in Table 1 was prepared and 2 wt% of Luster Pigment a in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 69.9. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 67.6%.

(Example 9)

TMG-031 manufactured by Tokan Material Technology was applied onto a 5 × 5 cm, 1.2 mm-thick SPCC steel sheet. After drying, the steel sheet was fired by maintaining in an electric furnace at 880°C for 15 min to form a navy blue (almost black in color) bottom glaze layer.

Frit (1) in Table 1 was prepared and 3 wt% of Luster Pigment c in Table 2 was added to the frit to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.19 mm thick) . The resulting enamel top glaze layer was gold in color and had a texture that possessed surface gloss as well as luster, not like any of conventional enamel top glaze layers. The texture resembled that of metallic painting.

The specular gloss (Gs 60°) of the surface was measured by using a VG2000 gloss meter manufactured by Nippon Denshoku Industries and was determined to be 58.8. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 377.9%.

(Example 10)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 15 min to form a navy blue (almost black in color) bottom glaze layer.

Frit (7) in Table 1 was prepared and 3 wt% of Luster Pigment d in Table 2 was added to the frit to prepare a glass material for enamels. To this glass material, a resin (squeegee oil OS4330 manufactured by Goo Chemical) was added to form a paste to serve as a top graze for enamels. The top glaze was then processed into about 0.2 mm-thick transfer paper by printing. The transfer paper was applied onto a surface of the bottom glaze layer and dried. Subsequently, the steel sheet was fired by maintaining in an electric furnace at 780°C for 10 min to form a top glaze layer (the top glaze layer was about 0.15 mm thick) . The resulting enamel top glaze layer was gold in color and had a texture that possessed surface gloss as well as luster, not like any of conventional enamel top glaze layers. The texture resembled that of metallic painting. The specular gloss (Gs 60°) of the surface was measured by using a VG2000 gloss meter manufactured by Nippon Denshoku Industries and was determined to be 87.6. Using a variable angle spectrophotometer GC 5000 manufactured by Nippon Denshoku Industries, light was irradiated onto the surface of the top glaze layer sample at an incident angle of -45° and the luminous reflectance (Y) of the sample was measured by varying the light receiving angle from -20° to 30° at 5 degree increments.

As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 233.8%.

(Example 11)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 10 min to form a navy blue (almost black in color) bottom glaze layer.

To this surface, TMW-155 manufactured by Tokan Material Technology was applied and dried. Subsequently, the steel sheet was fired by maintaining in an electric furnace at 820°C for 10 min to form a white intermediate glaze layer.

Frit 1 in Table 1 was prepared. 2 wt% of Luster Pigment b in Table 2 and then 3 wt% of a commercially available yellow pigment for enamels (zircon praseodymium yellow) were added to the frit to prepare a glass material for enamels. To this glass material, a resin (squeegee oil OS4330 manufactured by Goo Chemical) was added to form a paste to serve as a top graze for enamels. The top glaze was then processed into about 0.2 mm-thick transfer paper by printing. The transfer paper was applied onto a surface of the above-described top glaze layer and dried. Subsequently, the steel sheet was fired by maintaining in an electric furnace at 780°C for 10 min to form a top glaze layer (the top glaze layer was about 0.15 mm thick). The resulting enamel top glaze layer (top glaze layer) was yellow in color and had a texture that possessed surface gloss as well as luster, not like any of conventional enamel top glaze layers. The texture resembled that of metallic painting. This demonstrates that the present invention may also be applicable to additional decoration of the enamel top glaze layer.

The specular gloss (Gs 60°) of the surface was measured by using a VG2000 gloss meter manufactured by Nippon Denshoku Industries and was determined to be 85.6. Using a variable angle spectrophotometer GC 5000 manufactured by Nippon Denshoku Industries, light was irradiated onto the surface of the top glaze layer sample at an incident angle of -45° and the luminous reflectance (Y) of the sample was measured by varying the light receiving angle from -20° to 30° at 5 degree increments.

As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 7.6%.

(Example 12)

An approximately 5 cm × 5 cm sample piece was cut out from a commercially available white enamel tray (enamel tray, As-one).

Frit (1) in Table 1 was prepared and 2 wt% of Luster Pigment a in Table 2 was added to the frit to prepare a glass material for enamels. To this glass material, a resin (squeegee oil OS4330 manufactured by Goo Chemical) was added to form a paste to serve as a top graze for enamels. The top glaze was then processed into about 0.2 mm-thick transfer paper by printing. The transfer paper was applied onto a surface of the bottom glaze layer and dried. Subsequently, the sample piece was fired by maintaining in an electric furnace at 780°C for 10 min to form a top glaze layer (the top glaze layer was about 0.15 mm thick) . The resulting enamel top glaze layer had a texture that possessed surface gloss as well as luster, not like any of conventional enamel top glaze layers. The texture resembled that of metallic painting. This demonstrates that the present invention may also be applicable to additional decoration of the enamel top glaze layer.

The specular gloss (Gs 60°) of the surface was measured by using a VG2000 gloss meter manufactured by Nippon Denshoku Industries and was determined to be 80. 1. Using a variable angle spectrophotometer GC 5000 manufactured by Nippon Denshoku Industries, light was irradiated onto the surface of the top glaze layer sample at an incident angle of -45° and the luminous reflectance (Y) of the sample was measured by varying the light receiving angle from -20° to 30° at 5 degree increments.

As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was 5.9%.

(Comparative Example 1)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 10 min to form a navy blue (almost black in color) bottom glaze layer.

To this surface, TMW-155 manufactured by Tokan Material Technology was applied and dried. Subsequently, the steel sheet was fired by maintaining in an electric furnace at 820°C for 10 min to form a white top glaze layer.

This top glaze layer had gloss, but not luster, which was the texture of a typical white top glaze layer.

The specular gloss (Gs 60°) of this surface was measured by using a VG2000 gloss meter manufactured by Nippon Denshoku Industries and was determined to be 107.2. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was -12.7%.

(Comparative Example 2)

TMG-050 manufactured by Tokan Material Technology was applied onto a 5 × 5 cm, 1.2 mm-thick SPCC steel sheet. After drying, the steel sheet was fired by maintaining in an electric furnace at 830°C for 10 min to form a navy blue (almost black in color) bottom glaze layer.

2 wt% of Luster Pigment a in Table 2 was added to TMW-155 manufactured by Tokan Material Technology to prepare a glass material for enamels. To this glass material, water and an aqueous medium (manufactured by Meihindo) were added to form a paste to serve as a top glaze for enamels, which was then applied with a brush onto a surface of the prepared enamel bottom glaze layer. After drying, the steel sheet was fired by maintaining in an electric furnace at 800°C for 10 min to form a top glaze layer (the top glaze layer was about 0.15 mm thick).

The resulting enamel top glaze layer had surface gloss, but not luster, which was the texture of a typical white top glaze layer.

The specular gloss (Gs 60°) of this surface was measured by using a VG2000 gloss meter manufactured by Nippon Denshoku Industries and was determined to be 95.2. Using a variable angle spectrophotometer GC 5000 manufactured by Nippon Denshoku Industries, light was irradiated onto the surface of the sample at an incident angle of -45° and the luminous reflectance (Y) of the sample was measured by varying the light receiving angle from -20° to 30° at 5 degree increments. As a result, it turned out that the luminous reflectance $Y_{(30)}$ at a light receiving angle of 30° was increased from the luminous reflectance $Y_{(0)}$ at a light receiving angle of 0° and the percent change in reflectance $Y_{(0-30)}$ between light receiving angles of 0° and 30° was -10.6%.

[Table 1]

| Sample name | Average particle size (d50) [$\mu$m] | Composition (wt%) | | | | | | | | | | |
|---|---|---|---|---|---|---|---|---|---|---|---|---|
| | | $SiO_2$ | $Al_2O_3$ | CaO | $Na_2O$ | $K_2O$ | ZnO | BaO | SrO | $B_2O_3$ | $ZrO_2$ | $Li_2O$ |
| Frit (1) | 14.3 | 47.3 | 4.0 | 1.1 | 0.0 | 10.2 | 3.2 | 4.5 | 0.0 | 24.8 | 4.9 | 0.0 |
| Frit (2) | 14.8 | 44.8 | 6.3 | 0.6 | 0.0 | 13.7 | 3.4 | 1.6 | 0.0 | 24.5 | 5.1 | 0.0 |
| Frit (3) | 16.6 | 54.1 | 2.9 | 0.1 | 1.7 | 7.9 | 3.0 | 2.9 | 0.0 | 22.2 | 4.6 | 0.6 |
| Frit (4) | 13.5 | 52.7 | 3.9 | 1.1 | 0.2 | 9.0 | 3.1 | 3.0 | 0.0 | 21.7 | 4.7 | 0.6 |
| Frit (5) | 19.5 | 43.7 | 3.2 | 1.8 | 1.3 | 6.9 | 4.2 | 4.8 | 0.0 | 29.0 | 5.1 | 0.0 |
| Frit (6) | 17.8 | 49.4 | 0.2 | 1.7 | 0.0 | 9.7 | 3.4 | 4.7 | 0.0 | 25.8 | 5.1 | 0.0 |
| Frit (7) | 18.7 | 46.2 | 4.1 | 1.2 | 0.6 | 9.5 | 3.3 | 4.7 | 0.0 | 25.4 | 5.0 | 0.0 |
| Frit (8) | 18.0 | 48.5 | 4.1 | 0.0 | 3.1 | 6.7 | 4.1 | 0.0 | 3.1 | 25.4 | 5.0 | 0.0 |

[Table 2]

| Sample Name | Pigment Manufacturer |
|---|---|
| Luster Pigment a | Merck iriodin 6163 |
| Luster Pigment b | Merck miraval 5402 |
| Luster Pigment c | Merck iriodin 325 |
| Luster Pigment d | Merck Xirallic NXTM260-30 |

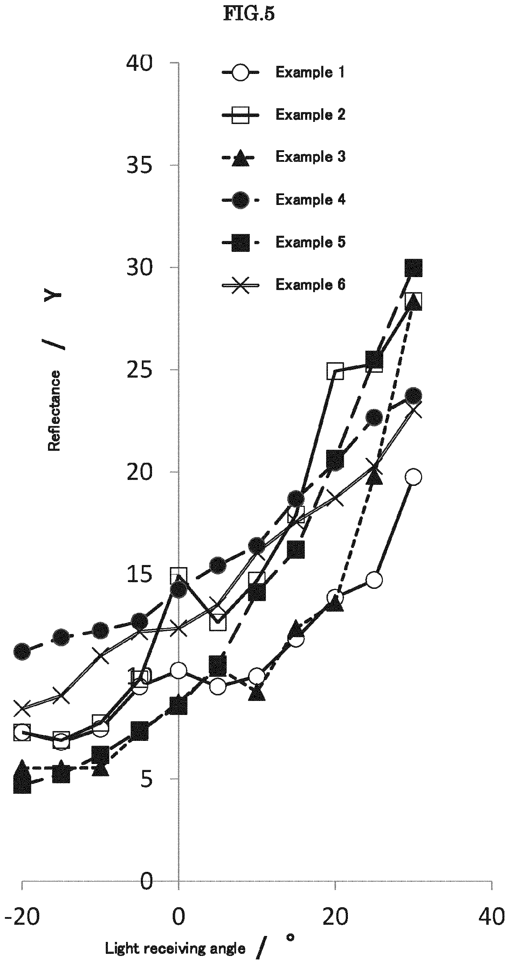

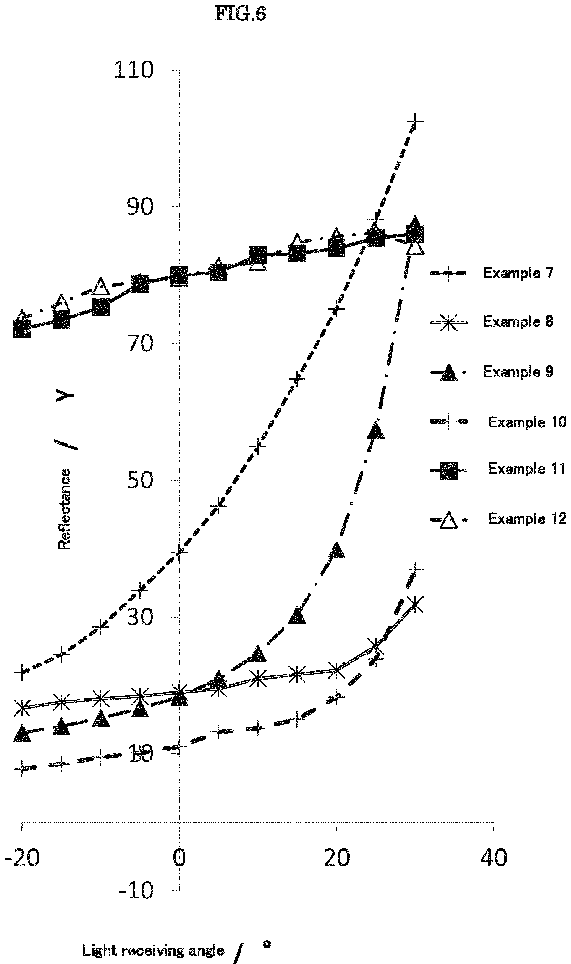

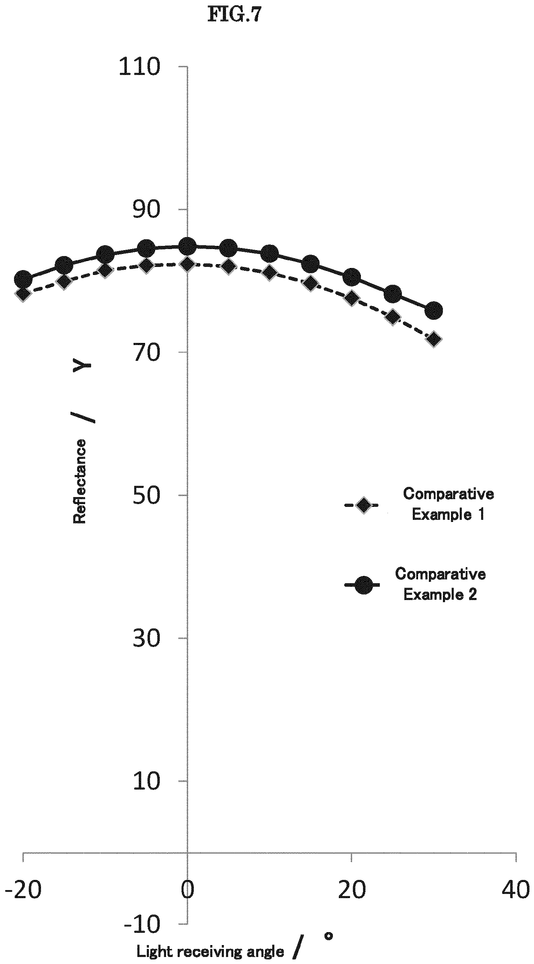

FIG. 5 is a diagram showing the results of measurement of the variable angle luminous intensity distribution in Examples 1 through 6 of the present invention (1) whereas FIG. 6 is a diagram showing the results of measurement of the variable angle luminous intensity distribution in Examples 7 through 12 of the present invention (2). FIG. 7 is a diagram showing the results of measurement of the variable angle luminous intensity distribution in Comparative Examples 1 and 2.

As shown in FIGS. 5 and 6, the top glaze layers containing a metallic luster pigment, which represent Examples of the present invention, had increased reflectance at a light receiving angle of 30° from the reflectance at a light receiving angle of 0°.

In contrast, as shown in FIG. 7, the top glaze layer with no metallic luster or metallic luster look (Comparative Examples) had decreased reflectance at a light receiving angle of 30° from the reflectance at a light receiving angle of 0°.

The properties of Luster Pigments a through d will now be described in more details. Table 3 shows particle size data of Luster Pigments a through d. Specifically, "particle size range" and "average particle size (d50)" are presented in Table 3. The particle size ranges are based on the catalog values provided by pigment manufacturers. The average particle size (d50) are data obtained by using LMS-2000e, a laser diffraction/scattering size distribution measurement instrument manufactured by Seishin Enterprise with the particle refraction index set to 1.7 and the particle absorbance to 0.1. In the present specification, the d50 value based on the measurement is used as a measure of the particle size distribution (size distribution) of the luster pigments.

Table 4 shows compositions of Luster Pigments a through d. The compositions of Luster Pigments a through d show values measured for each production lot. On the other hand, since values measured for each production lot as described above were not available for Luster Pigment d, a quantitative analysis was conducted on Luster Pigment d by the fundamental parameter method using ZSX Primus II, an X-ray fluorescence spectrometer manufactured by Rigaku. In this quantitative analysis, a 0.4 g sample of Luster Pigment d was mixed with 3 g of lithium tetraborate as a dissolving agent, and the mixture was heated at 1200°C for 4 min to prepare glass beads, which were then loaded on the spectrometer for measurement.

In the present invention, the factors such as shape, size distribution, average particle size, and optical properties are believed to be major contributers to the effects responsible for the metallic luster look. Thus, it should be appreciated that the present invention is not limited to compositions of the luster pigments.

The luster pigments in the present invention may also be considered to be those that do not dissolve when added to a frit prepared for the present invention and heated to about 800°C.

[Table 3]

| Sample Name | Particle Size (μm) | |
|---|---|---|
| | Particle Size Range | Average Particle Size (d50) |
| Luster Pigment a | 20-180 | 81.9 |
| Luster Pigment b | 20-200 | 73.5 |
| Luster Pigment c | 5-25 | 12.3 |
| Luster Pigment d | 5-30 | 18.6 |

[Table 4]

| Sample Name | Composition (wt%) | | | | | | |
|---|---|---|---|---|---|---|---|
| | Mica | $TiO_2$ | $SnO_2$ | $SiO_2$ | Borosilicate glass | $Fe_2O_3$ | $Al_2O_3$ |
| Luster Pigment a | 87.6 | 11.6 | 0.8 | - | - | - | - |
| Luster Pigment b | - | 15.0 | 1.1 | 26.0 | 57.9 | - | - |
| Luster Pigment c | 31.0 | 21.0 | 1.0 | 12.0 | - | 35.0 | - |
| Luster Pigment d | - | 20.7 | 2.4 | 1.0 | - | 35.0 | 40.9 |

According to the glass material for enamel in accordance with the present invention as described above, the luster pigments do not dissolve in high temperature glass and can thus maintain their luster property at top glaze firing temperatures used for enamel products (approximately 800°C). As a result, enamel products can be provided that have a metallic texture and have a luster glass layer with surface gloss applied thereto.

Further, the glass material for enamel in accordance with the present invention enables provision of enamel products having metallic luster that maintain a high surface gloss, are less likely to accumulate dirt and grime on the surface thereof, and that can be used as eating utensils.

Moreover, the enamel products in accordance with the present invention are enamel products that possess a "metallic" texture and have a luster glass layer with surface gloss applied thereto.

In addition, the production methods for the enamel products in accordance with the present invention enable production of enamel products that possess a "metallic" texture and have a luster glass layer with surface gloss applied thereto.

## Claims

1.   A glass material for enamel, **characterized by** comprising:

   a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide, and potassium oxide; and
   a luster pigment for providing a metallic look.

2.   The glass material for enamel according to Claim 1, **characterized by** comprising 0.1 wt% to 9 wt% of the luster pigment, with the remainder being the frit.

3.   The glass material for enamel according to Claim 1, **characterized by** comprising 0.1 wt% to 9 wt% of the luster pigment and a non-luster pigment, with the remainder being the frit.

4.   The glass material for enamel according to Claim 1, **characterized by** comprising 0.1 wt% to 9 wt% of the luster pigment and a chromogenic metal compound, with the remainder being the frit.

5.   The glass material for enamel according to any one of Claims 1 to 4, **characterized in that** the luster pigment comprises plate-shaped particles, and/or plate-shaped particles coated with one or more oxides selected from the group consisting of titanium oxide, ferric oxide, silicon oxide, tin oxide, and zirconium oxide.

6.   The glass material for enamel according to Claim 5, **characterized in that** the plate-shaped particles are one or more selected from the group consisting of mica, silicon oxide, aluminum oxide, and borosilicate glass.

7.   An enamel product **characterized by** comprising a glass layer comprising 0.1 wt% to 9 wt% of a luster pigment for providing a metallic look.

8.   The enamel product according to Claim 7, **characterized in that** the glass layer comprises 40 wt% to 60 wt% of silicon dioxide, 15 wt% to 35 wt% of boron oxide, and 18 wt% or less of one or more alkali metal oxides selected from the group consisting of lithium oxide, sodium oxide, and potassium oxide.

9. The enamel product according to Claim 7 or 8, **characterized in that** the glass layer comprises a non-luster pigment.

10. The enamel product according to Claim 7 or 8, **characterized in that** the glass layer comprises a chromogenic metal compound.

11. The enamel product according to any one of Claims 7 to 10, **characterized in that** the luster pigment comprises plate-shaped particles, and/or plate-shaped particles coated with one or more oxides selected from the group consisting of titanium oxide, ferric oxide, silicon oxide, tin oxide, and zirconium oxide.

12. The enamel product according to Claim 11, **characterized in that** the plate-shaped particles are one or more selected from the group consisting of mica, silicon oxide, aluminum oxide, and borosilicate glass.

13. The enamel product according to any one of Claims 7 to 12, **characterized in that** the surface of the glass layer has a specular gloss value (Gs 60°) of 60 or higher, and the value of luminous reflectance Y at a light receiving angle of 30° is increased from the value of luminous reflectance Y at a light receiving angle of 0° in a variable angle luminous intensity distribution measured at an incident light angle of -45°.

14. A method for producing an enamel product, **characterized by** comprising the steps of:

preparing a glass material for enamel comprising a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, and a luster pigment for providing a metallic look;
preparing a paste comprising the glass material for enamel;
applying the paste to a substrate; and
baking the substrate.

15. A method for producing an enamel product, **characterized by** comprising the steps of:

preparing a glass material for enamel comprising a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, a luster pigment for providing a metallic look, and a non-luster pigment;
preparing a paste comprising the glass material for enamel;
applying the paste to a substrate; and
baking the substrate.

16. A method for producing an enamel product, **characterized by** comprising the steps of:

preparing a glass material for enamel comprising a frit that has a composition thereof including 40 wt% to 60 wt% of silicon dioxide, 15 wt% to 35 wt% of boron oxide, and 18 wt% or less of one or more alkali metal oxides selected from the group consisting of lithium oxide, sodium oxide and potassium oxide, a luster pigment for providing a metallic look, and a chromogenic metal compound;
preparing a paste comprising the glass material for enamel;
applying the paste to a substrate; and
baking the substrate.

## FIG.1(A)

Incident light    Reflected light

## FIG.1(B)

Incident light    Reflected light

Luster pigment

## FIG.2

(Measured by varying light receiving angle of light receiving device)

Light receiving device

0°

Incident light

Reflected light

−90°      +90°

Overglaze sample

18

## FIG.3

FIG.4

Light receiving angle / °

## FIG.5

Legend:
- Example 1 (○)
- Example 2 (□)
- Example 3 (▲)
- Example 4 (●)
- Example 5 (■)
- Example 6 (✕)

Y-axis: Reflectance / Y

X-axis: Light receiving angle / °

# FIG.6

EP 3 782 963 A1

**FIG.7**

23

## INTERNATIONAL SEARCH REPORT

| International application No. |
| --- |
| PCT/JP2018/039691 |

A. CLASSIFICATION OF SUBJECT MATTER
Int. Cl. C03C8/14(2006.01)i, C03C8/02(2006.01)i, C23D5/00(2006.01)i

According to International Patent Classification (IPC) or to both national classification and IPC

B. FIELDS SEARCHED

Minimum documentation searched (classification system followed by classification symbols)
Int. Cl. C03C8/14, C03C8/02, C23D5/00

Documentation searched other than minimum documentation to the extent that such documents are included in the fields searched
Published examined utility model applications of Japan       1922-1996
Published unexamined utility model applications of Japan    1971-2019
Registered utility model specifications of Japan             1996-2019
Published registered utility model applications of Japan     1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X <br> Y | JP 1-149975 A (NGK FRIT KK) 13 June 1989, claims, page 2, lower right column, line 13 to page 3, upper left column, line 8, tables 2-4 (Family: none) | 1, 2, 5-8, 11-14 <br> 3, 4, 9, 10, 15, 16 |
| X <br> Y | JP 4-325438 A (NGK FRIT KK) 13 November 1992, paragraph [0007], table 1 (Family: none) | 1, 2, 5-8, 11-14 <br> 3, 4, 9, 10, 15, 16 |
| Y | JP 3-247534 A (THE NIPPON CHEMICAL INDUSTRIAL CO., LTD.) 05 November 1991, page 2, lower right column, line 16 to page 3, upper left column, line 6 (Family: none) | 3, 9, 15 |

☒ Further documents are listed in the continuation of Box C.      ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search <br> 10.01.2019 | Date of mailing of the international search report <br> 22.01.2019 |
| --- | --- |
| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

**INTERNATIONAL SEARCH REPORT**

| International application No. |
| --- |
| PCT/JP2018/039691 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-167756 A (MEIHINDOU KK) 23 June 1998, paragraph [0025] (Family: none) | 4, 10, 16 |

Form PCT/ISA/210 (continuation of second sheet) (January 2015)

**EP 3 782 963 A1**

## REFERENCES CITED IN THE DESCRIPTION

**Patent documents cited in the description**

- JP 2001342581 A

- JP HEI4325438 A